# EUROPEAN PATENT APPLICATION

(11) **EP 1 447 134 A1**
(43) Date of publication of application: **18.08.2004**
(21) Application number: 03003509.1
(22) Date of filing: 15.02.2003
(51) Int. Cl.: B01L 3/00

(54) **Microfluidic system**

(71) Applicant: Agilent Technologies, Inc., A Delaware Corporation, Palo Alto, CA 94303-0380 (US)
(72) Inventor: Choikhet, Konstantin, Agilent Technologies, 76337 Waldbronn (DE)
(74) Representative: Kurz, Peter

(57) **Abstract**

The invention refers to a microfluidic system, particularly a microfluidic chip with at least one analytical channel (25) in which a fluid and/or constituents contained therein are movable, and with a detection area (24) in which the fluid and/or the constituents contained therein can be analyzed. At least three channel sections (28, 29, 30) of said channel (25) or of channels cross a substantially linear scan area (27) within the detection area (24), wherein at least one of the channels (25) has a meander-shaped channel section (32) within the detection area (26), so that at least two of its channel sections (28, 29, 30) cross the scan area (27).

## Description

The invention relates to a microfluidic system, particularly a microfluidic chip, with at least one analytical channel in which a fluid and/or constituents contained therein are movable by a driving force, particularly by using of pressure, acoustic energy and/or an electrical field, through the analytical channel, and with a detection area in which the fluid and/or the constituents contained in the analytical channel can be detected and/or analyzed.

In analytical systems based on a microfluidic chip platform and using optical (UV, fluorescent etc.) detection it is necessary to correctly position the chip relatively to the optical system, i. e. so that the measuring optical system is focused at the chip structures relevant for detection. For that purpose an automated procedure is desirable, and it is especially necessary for highly automated instruments using disposable or exchangeable microfluidic chips.

Usually these kind of instruments are capable of scanning the microfluidic chip in direction across the lanes, i. e. across the capillary channel structures, in which the detection is to be performed, and are capable of aligning the microfluidic chip to the optical system in terms of the distance between the focus point and the plane of the microfluidic chip, e. g. by aligning the chip to the optical system along the optical axis by moving the chip in a direction perpendicular to the plane of the chip. This method is especially applied by using a confocal fluorescence detector. A direct search for the chip position, at which the highest response signal is obtained, is the most direct and thus most reliable procedure for chip alignment.

One of the problems to be solved during the search for this optimum position is to distinguish between the relevant structures on the chip and possible artifacts. In order to achieve this, it is less reliable to refer to any absolute positioning parameters when aligning the chip or in an attempt to distinguish the chip structures from the artifacts; the more reliable approach is to recognize a certain pattern of relevant structures on a chip and then to bring it in focus. It is readily realizable in the case of microfluidic chips with multiple lanes, i. e. three or more lanes, at which the detection is to be performed. In this case a pattern of signals corresponding to the number of lanes can be defined for a scan across the chip and thus the signals corresponding to the lanes can be reliably distinguished from those of artifacts.

In the case of microfluidic chips having a less number of lanes, i. e. only one or two lanes, no recognizable pattern can be defined based on the relative position of the lanes. In the case of only one single lane there are no geometric criteria at all to distinguish a signal of the lane from that of an eventual artifact. Neither it is possible to distinguish two lane signals in the presence of an eventual artifact on the microfluidic chip with only two lanes, unless an absolute distance between the two lanes is measured, which in turn can be instrument-dependent and thus, is less reliable. The use of microfluidic chips having low number of lanes (one or two) interspersing the detection area is a need in applications with low to medium sample throughput. Low number of lanes (e.g. two) is also a need for applications including complex on-chip procedures and thus requiring a complex channel matrix design with numerous reagent and/or sample wells, as e.g. protein analyses or the like.

It is therefore an object of the invention to provide a microfluidic system, particularly having only one or two analytical channels, which allow an automated and highly reliable positioning relative to a detector for analyzing fluids and/or constituents therein.

This object is solved by the features of Patent Claim 1, particularly in that at least three channel sections of that channel or of channels cross a substantially linear scan area within the detection area, said scan area serving for determination of the position of said channel and setting a detection point corresponding to this channel, or of the position of said channels and setting detection points corresponding to each of this channels, where the fluid and/or the constituents contained therein is/are to be detected and/or analyzed, by using a scanning device which is connectable to a detector or is a feature (subfunction) of a detector itself, i.e. preferably by using a scanning functionality of the detector itself, wherein at least one of the channels has a meander-shaped channel section within the detection area, so that at least two of its channel sections cross the scan area.

Thus it is an important feature of the invention that the total number of lane sections or channels respectively crossing the scan area is at least three times. These at least three channels or lane sections can thus be used as a recognizable pattern in a cross-scan.

It is of particular advantage, if at least one of the channels or lanes is meander-shaped within the detection area, so that meanders of this at least one channel or lane cross the scan area at least two times. In other words in such a case, one and the same channel or lane respectively cross the scan area at least two times.

This means in the case of only one single analytical channel, interspersing the detection area, that this single channel crosses the scan area at least three times, so that in a cross-scan we can get a recognizable pattern of at least three peaks.

On the other hand, in the case of two or more working channels interspersing the detection area, at least one of these at least two channels may be meander-shaped, so that meanders of this at least one channel cross the scan area at least two times. Again and as in any of the described implementation variants, the total number of lane sections crossing the scan area is at least three.

In an advantageous further development of the invention, all channels, preferably used for detection and/or analysis, may be arranged in the detection area and each of those channels may have a meander-shaped channel section, wherein at least two of the channel sections of each channel may cross the scan area.

For this, it is particularly advantageous, if all channels, preferably used for detection and/or analysis, area are meander-shaped, so that meanders of these channels cross the scan area at least two times.

It is particularly advantageous, if the at least three channel sections of the channel or of the channels cross a substantially straight scan area within the detection area. This allows a time and cost effective and highly accurate procedure.

It is further advantageous, if the respective detection point is arranged or set within the scan area and at the channel section of the channel or of the channels, which is located upstream in relation to a direction of flow or migration of the fluid and/or constituents therein. I. e. the lane section reached by the sample or the analytes respectively at the earliest is preferably used for detection in order to avoid peak broadening due to a hoarse-race effect.

In a further embodiment of the invention it is possible that at least one analytical channel and/or one channel which does not serve as an analytical channel, which contains a detectable medium, has a meander-shaped channel section within the scan area. This means that alternatively additional lanes can be embedded into the microfluidic chip to provide a desired pattern alone or in combination with the analytical lanes. These additional lanes can be either filled with a liquid or solid detectable medium in chip manufacturing or can be filled at a post-manufacturing stage. It is understood that these additional lanes can be sealed or not. Furtheron, the meander structures can be embedded in some or in all of the detection lanes.

The channel sections next to each other can preferably be arranged within the scan area at essentially the same distance. This means that in this preferred implementation the meander structures are embedded into the lanes, providing equidistant lane sections in the scan area. Alternatively the distances between the single lane sections mentioned above can be chosen unequal and staying in certain ratios to one another. With other words, channel sections next to each other may be arranged within the scan area at different distances, which stay in predefined ratios to one another.

The above mentioned features can be arbitrarily combined within the limits to carry out the invention. Further features, perspectives and advantages of the invention may be taken from the following part of the description, illustrated by the figures, in which preferred embodiment examples of the invention are described.

The figures show:
- Fig. 1: a three-dimensional view of a microfluidic chip containing a number of reservoirs to receive fluid substances and containing an open network of interconnected micro-channels, wherein one or more separation channels serving as operational or analytical channels are provided, which may especially be used in electrically driven (electrophoretic) fluid analysis, and which intersperses a transparent detection area, so that an optical analysis is possible, e. g. by way of a confocal fluorescence detector (not shown);
- Fig. 2: an enlarged top view of the detection area of fig. 1 in a first embodiment, showing one single analytical channel which is meander-shaped, wherein three meanders crossing a linear straight scan area;
- Fig. 3: an enlarged top view of the detection area of fig. 1 in a second embodiment, showing two analytical channels, which are both meander-shaped, wherein two meanders of each main channel are crossing a linear straight scan area.

The microfluidic system 20 contains a microfluidic chip 21. It includes the caddy 22 serving as a housing that contains here a total of twenty four reservoirs which are also called wells to receive diverse fluidic substances. The reservoirs 23 may receive a buffer that serves as a separating medium and other of them may be pre-filled with some buffer solution, or standards, or samples, or be used to receive waste. Some of the reservoirs 23 are mutually fluid connected via micro-channels, that jointly form one or several open fluidic networks within the chip. Also the microfluidic chip 21 can include capillaries (sippers) at its bottom side (not shown in the drawings), which are used for transporting samples e.g. by sucking or drawing (sipping) into the microfluidic chip 21 for further analysis.

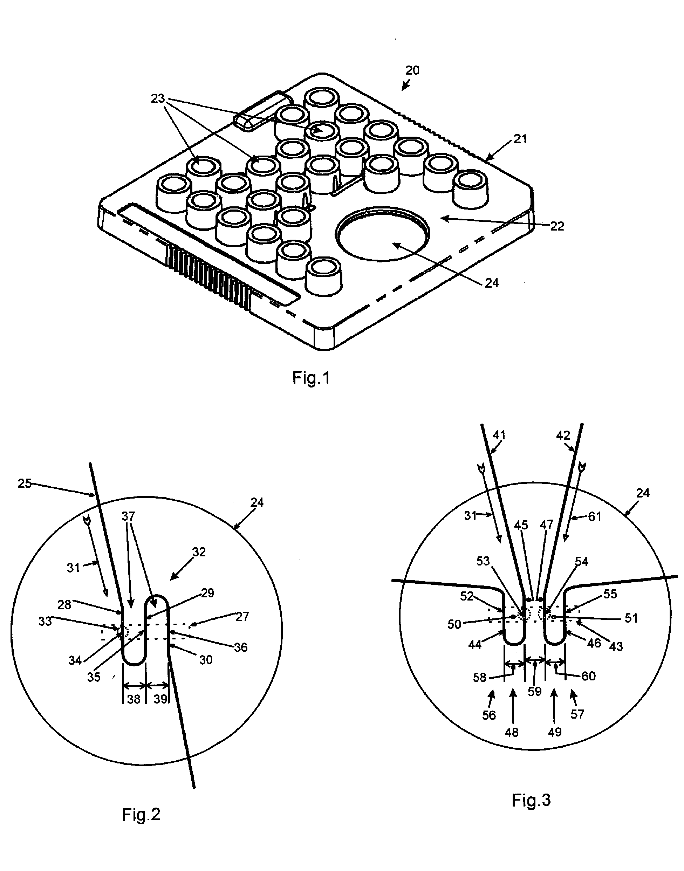

The microfluidic chip 21 contains a transparent detection area 24 which is interspersed by one analytical channel 25 (fig. 2) or by two or more analytical channels 41, 42 (fig. 3). It is understood that in case of two or more channels interspersing the detection area 24 that one or more of these interspersing channels must not be analytical or separating channels but also can be channels which do not serve as analytical channels but which also may serve as means to provide a desired channel pattern.

In the embodiment as shown in fig. 2 one single capillary analytical channel 25 contains a meander-shaped section 32, i.e. the analytical channel 25 has several meanders 37. Due to that, the analytical channel 25 contains three channel sections 28, 29, 30 which are preferably arranged parallel to each other, wherein channel sections 28 and 29 and channel sections 29 and 30 are each fluid connected by further channel sections, which are in this embodiment curved segments, but can also be straight lines. Thus a S-shaped meander structure is achieved.

Each of the channel sections 28, 29, 30 crosses a linear and straight scan area 27. This scan area 27 serves to perform a cross-scan for developing the optimal position of the microfluidic chip relative to an optical sensor (not shown) with respect to a maximization of a response signal or maximization of signal to noise ratio of the detector.

As can clearly be seen, channel sections 28, 29, 30 each cross the scan area 27 at scannable points 34, 35, 36 respectively, so that channel sections 28, 29 and channel sections 29, 30 next to each other are arranged within the scan area 27 in essentially the same distance 38, 39 in this embodiment.

In the embodiment shown in fig. 2 the analytical channel 25 and all its channel sections, including the channel sections 28, 29, 30 are arranged within a flat plane which corresponds to the horizontal plane of the microfluidic chip 21.

As can further be seen from fig. 1 within the scan area 27 a detection place or point 33 is provided. This detection point 33 is set at the channel section 28 of the channel 25 which is located upstream in relation to the direction of flow 31 or sample migration respectively, of a fluid in channel 25.

In the embodiment as shown in fig. 3, two analytical channels 41, 42 are provided for in a detection area 24. Each channel 41, 42 contains a meander-shaped section 48 and 49. I. e. channel 41 has several meanders 56 and channel 42 has several meanders 57. The meanders 56, 57 of these channels 41, 42 cross the scan area 43 at least two times, each with their channel sections 44 and 45 as well as 46 and 47. Channel sections 44, 45 and 46, 47 are arranged parallel to each other in this embodiment.

Thus, in this embodiment, the linear straight lane scan area 43 is crossed at four scannable points 52, 53, 54, 55 in a way that each of the two channels 41, 42 cross the scan area 43 two times.

Channel sections 44 and 45 as well as channels sections 46, and 47 are both fluid connected by a further channel section of channels 41 or 42 respectively, which are in this embodiment curved segments, but can also be straight lines. Channel section 44 and channel section 45 next to it is arranged in a distance 58. Channel section 46 and channel section 47 next to it is arranged in a distance 60, which in this embodiment is essentially equal to distance 58. Further on, channel section 45 and channel section 47 next to it is arranged in a distance 59 that in this embodiment is essentially equal to distances 58 and 60.

As can be seen from fig. 3, two detection points 50, 51 are set within the scan area 43. Detection point 50 is set at channel section 45 of channel 41 whereas detection place 51 is set at channel section 47 of channel 42. These channel sections 45 and 47, and thus the detection points 50 and 51, are located upstream in relation to the direction of flow 31, 61 or migration respectively of the fluid and/or constituents therein, in channels 41 and 42 respectively.

Channels 41 and 42 and all of their channel sections, including channel sections 44, 45, 46, 47 are arranged in this embodiment within a flat plane corresponding to a horizontal plane of the microfluidic chip 21.

In a further important embodiment, the invention refers to a microfluidic system, particularly a microfluidic chip 21 with at least one analytical channel 25 in which a fluid and/or constituents contained therein are movable, and with a detection area 24 in which the fluid and/or the constituents contained therein can be detected and/or analyzed. At least three channel sections 28, 29, 30; 44, 45, 46, 47 of said channel 25 or of channels 41, 42 cross a scan area 27, 43 within the detection area 24, which scan area is preferably designed substantially linear, wherein at least one of the channels 25; 41, 42 has a meander-shaped channel section 32, so that at least two of its channel sections 28, 29, 30 cross the scan area 27.

## Claims

1. A microfluidic system (20), particularly a microfluidic chip (21), with at least one analytical channel (25; 41, 42) in which a fluid and/or constituents contained therein are movable by a driving force, particularly by using of pressure, acoustic energy and/or an electrical field, in the direction of the analytical channel (25, 41, 42) and with a detection area (24) in which the fluid and/or the constituents contained therein can be detected and/or analyzed,
**characterized in that**
at least three channel sections (28, 29, 30; 44, 45, 46, 47) of said channel (25) or of channels (41, 42) cross a substantially linear scan area (27; 43) within the detection area (24), said scan area (27; 43) serving for determination of the position of said channel (25) and setting a detection point (33) corresponding to this channel (25) or of the position of said channels (41, 42) and setting detection points (50, 51) corresponding to each of this channels (41, 42), where the fluid and/or the constituents contained therein is/are to be detected and/or analyzed by using a scanning device which is connectable to a detector or is a feature of a detector, wherein at least one of the channels (25; 41, 42) has a meander-shaped channel section (32; 48, 49), so that at least two of its channel sections (28, 29, 30; 44, 45, 46, 47) cross the scan area (27; 43).

2. A microfluidic system as in Claim 1, **characterized in that** at least one of the channels (25; 41, 42) is meander-shaped within the detection area (24), so that meanders (37; 56, 57) of this at least one channel (25; 41, 42) cross the scan area (27; 43) at least two times.

3. A microfluidic system as in one of Claims 1 or 2, **characterized in that** all channels (41, 42) used for detection and/or analysis, each having a meander-shaped channel section (48, 49), wherein at least two of its channel sections (44, 45; 46, 47) each cross the scan area (43).

4. A microfluidic system as in Claim 3, **characterized in that** all channels (41, 42) used for detection and/or analysis are meander-shaped, so that meanders (56, 57) of these channels (41, 42) cross the scan area (43) at least two times.

5. A microfluidic system as in one of Claims 1 to 4, **characterized in that** the at least three channel sections (28, 29, 30; 44, 45, 46, 47) of the channel (25) or of the channels (41, 42) cross the substantially straight scan area (27; 43) within the detection area (24).

6. A microfluidic system as in one of Claims 1 to 5, **characterized in that** the respective detection point (33; 50, 51) is arranged or set within the scan area (27; 43) and at the channel section (28; 45, 47) of the channel.(25) or of the channels (41, 42) which is located upstream in relation to a direction of flow (31, 61) of the fluid and/or the constituents therein.

7. A microfluidic system as in one of Claims 1 to 6, **characterized in that** at least one analytical channel (25; 41, 42) and/or one channel which does not serve as an analytical channel, which contains a detectable medium, has a meander-shaped channel section within the scan area (27; 43).

8. A microfluidic system as claimed in Claims 1 to 7, **characterized in that** channel sections (28, 29, 30; 44, 45, 46, 47) next to each other are arranged within the scan area (27; 43) at essentially the same distance (38, 39; 58, 59, 60).

9. A microfluidic system as claimed in Claims 1 to 7, **characterized in that** channel sections (28, 29, 30; 44, 45, 46, 47) next to each other are arranged within the scan area (27; 43) at different distances (38, 39; 58, 59, 60), which stay in predefined ratios to one another.
